# EUROPÄISCHE PATENTSCHRIFT

(11) **EP 2 152 552 B1**
(45) Veröffentlichungstag und Bekanntmachung des Hinweises auf die Patenterteilung: **29.02.2012**
(21) Anmeldenummer: 08759972.6
(22) Anmeldetag: 23.05.2008
(51) Int. Cl.: B60S 9/04, B62D 61/08, B60S 9/08

(54) **RADSEGMENT FÜR STÜTZFUSS AUS GUSS**
WHEEL SEGMENT FOR A SUPPORTING LEG MADE OF CAST IRON
SEGMENT DE ROUE EN FONTE POUR UN PIED D'APPUI

(30) Priorität: 23.05.2007 DE 102007023911
(43) Veröffentlichungstag der Anmeldung: 17.02.2010
(73) Patentinhaber: Jost-Werke GmbH, 63263 Neu-Isenburg (DE)
(72) Erfinder: ALGÜERA, José Manuel, 63739 Aschaffenburg (DE); SEIDEL, Günter, 64560 Riedstadt (DE)
(74) Vertreter: Fuchs
(86) Internationale Anmeldenummer: PCT/EP2008/056371
(87) Internationale Veröffentlichungsnummer: WO 2008/142161

(56) Entgegenhaltungen:
- DE-A1- 3 642 079
- GB-A- 2 207 102
- GB-A- 2 240 527
- US-A- 3 920 094

## Beschreibung

Die Erfindung betrifft ein Radsegment zur schwenkbaren Anbringung einer Fußplatte an eine Stützwinde, wobei das Radsegment ein teilzylindrisches Mantelelement mit einer auf seiner Unterseite gewölbten Abrollfläche und zwei radial auf dem Mantelelement stehende Seitenwände aufweist, in deren oberen Abschnitt jeweils ein Anschlagpunkt ausgebildet ist. Ebenso ist eine Anordnung des Radsegmentes an einer Stützwinde geschützt.

Derartige Stützwinden befinden sich meist in paarweiser Anordnung an der Unterseite von Sattelaufliegern. Meistens umfassen diese ein ortsfest an dem Auflieger anbringbares Außenrohr und ein zweites demgegenüber teleskopierbares Innenrohr, an dessen Ende sich eine Fußplatte befindet. Zum Abkuppeln des Aufliegers werden die Stützwinden ausgefahren, so dass diese den Auflieger in seinem vorderen Bereich abstützen und das Zugfahrzeug unter dem Auflieger wegfahren kann. Bei den heute im Einsatz befindlichen luftgefederten Aufliegern kann es während längerer Standzeiten, hervorgerufen durch einen Druckverlust in den Luftfederbälgen des Aufliegers, zu einem Absinken des hinteren Aufliegerbereiches kommen. Durch das Absenken des Aufliegers wirken auch in der Längsachse Schubkräfte auf die mit ihren Stützfüßen reibschlüssig auf dem Boden stehenden Stützwinden, welche dadurch einer erheblichen Biege- und Knickbeanspruchung ausgesetzt sind.

Um diesem Effekt entgegenzuwirken, wurden in der Vergangenheit bereits Bestrebungen unternommen, an dem unteren Bereich der Stützwinde ein Radsegment anzuordnen, welches die auftretenden Schubkräfte durch ein Abrollen auf die darunter befindliche Fußplatte ausgleicht.

Ein bekanntes Radsegment wird in der DE 40 03 414 A1 beschrieben, welches aus miteinander verschweißten Einzelkomponenten besteht. Eine derartige Fertigung ist äußerst kostspielig, da die Seitenwände vor dem Verschweißen mit der Abrollfläche zunächst exakt zueinander ausgerichtet werden müssen. Nachträglich werden anschließend zusätzliche Verstärkungsplatten an die Seitenwände sowie dazwischen verlaufende Traversen von Hand einzeln aufgeschweißt.

Demzufolge lag der Erfindung die Aufgabe zugrunde, ein Radsegment bei mindestens gleicher Festigkeit kostengünstiger herzustellen.

GB-A-2 207 102 offenbart den Oberbegriff des Anspruchs 1.

Die Aufgabe wird erfindungsgemäß mit einem Radsegment gelöst, welches als einstückiges Gussteil gefertigt ist. Unter einstückig werden alle nicht lösbaren Bauelemente des Radsegmentes im montagefertigen Zustand verstanden. Hierzu gehören insbesondere Verstärkungsplatten und die Seitenwände verbindende Traversen.

Es hat sich als günstig herausgestellt, wenn in dem Mantelelement beidseitig des unteren Scheitelpunktes jeweils ein Durchbruch ausgebildet ist. Unter dem Begriff Scheitelpunkt wird bei einer senkrecht stehenden Stützwinde genau der unter diesem stehende Abschnitt der Abrollfläche des Radsegmentes verstanden, welcher in Umfangsrichtung mittig zwischen den beiden Enden der Abrollfläche liegt. Durch diese Durchbrüche lassen sich beispielsweise Federelemente in Form von Schraubenfedern durchführen, die für eine Rückstellung der Fußplatte im unbelasteten Zustand sorgen.

Die jeweiligen Durchbrüche sind vorteilhafterweise nicht als Schlitz mit einer rechteckigen Kontur ausgebildet, sondern weisen in Umfangsrichtung des Mantelelementes, nach außen beabstandet zu dem Scheitelpunkt, mindestens eine Aufweitung auf. Die Aufweitung kann gegenüber der ursprünglichen Schlitzkontur beispielsweise parabelförmig oder halbrund geformt sein.

Durch eine nach außen zumindest teilweise aufgeweitete Kontur des Durchbruchs verbleibt ein Mantelelement mit verhältnismäßig viel Material im Bereich des Scheitelpunktes mit einer großen Auffangfläche für vertikal wirkende Lastspitzen. Beidseitig des Scheitelpunktes des Radsegments hingegen ist eine große Abrollfläche nicht notwendig, da die dort zu erwartenden Lasten geringer sind. Demzufolge reicht mit in Umfangsrichtung zunehmender Distanz zu dem Scheitelpunkt eine durch die Aufweitung reduzierte Abrollfläche aus. Zum äußeren Rand der Abrollfläche hin ist die Aufweitung wieder verkleinert und in gleichem Maße die Abrollfläche vergrößert ausgebildet. Insgesamt wird durch diese bevorzugte Ausführung der Nachteil der an sich schwereren Fertigung des Radsegmentes als Gussteil durch Materialeinsparungen in den geringer belasteten Flächen kompensiert.

Die Seitenwände sollten in Umfangsrichtung endseitig mittels Traversen miteinander verbunden sein. In erster Linie dienen diese Traversen als Anschlag bei einer vollständig ausgelenkten Fußplatte. Zusätzlich können an den Traversen Federelemente eingehängt sein, welche eine Rückstellkraft auf die Fußplatte in Richtung einer mittigen Position unterhalb des Scheitelpunktes des Radsegmentes ausüben.

Vorzugsweise weist das Mantelelement an seinem unteren Scheitelpunkt eine Abplattung auf.

Durch die Abplattung oder ebene Fläche im Bereich des Scheitelpunktes steht im ausgefahrenen Zustand der Stützwinde bei in vertikaler Richtung wirkenden Lastspitzen auf das Radsegment beziehungsweise der darunter befindlichen Fußplatte eine größere Fläche zum Auffangen der Stöße und zum Abführen der Kräfte zur Verfügung, als es bei einer teilzylindrischen Abrollfläche der Fall wäre. Diese ermöglicht lediglich eine linienartige Berührung zwischen dem Radsegment und der Fußplatte mit entsprechend hohen Flächenpressungen. Diese sind jedoch insbesondere bei dem zum Sprödbruch neigenden Gussmaterial von Nachteil.

Gemäß einer besonders zweckmäßigen Ausführungsform weist jede Traverse eine nach innen geneigte Endanschlagsfläche auf. Die Endanschlagsflächen sind derart ausgerichtet, dass diese bei einer Kontaktierung mit dem Rohr der Stützwinde flächig an diesem anliegen. Die bei den bekannten Radsegmenten üblicherweise auftretende linienartige Berührung zwischen beispielsweise einer im Querschnitt runden Traverse und dem Rohr der Stützwinde wird dadurch vermieden. Dieses wiederum senkt erheblich die auf die beteiligten Bauteile wirkende Kerbwirkung. Eine geneigte Endanschlagsfläche ist besonders einfach an einem Gussbauteil zu verwirklichen.

Fertigungstechnisch günstig kann das Radsegment ohne Kern gegossen werden.

Das vorstehend näher beschriebene Radsegment ist in eingebautem Zustand üblicherweise in eine Stützwinde integriert und bildet zusammen mit der Fußplatte einen Stützfuß, wobei die Stützwinde einen unteren Rohrabschnitt aufweist, an welchem das Radsegment schwenkbar gelagert ist, und das Radsegment abrollbar auf der Fußplatte aufsteht.

Vorzugsweise steht in einer Ausgangsstellung die Abplattung in flächenartigem Wirkkontakt mit der Fußplatte. Unter Ausgangsstellung wird eine mittige Position des Stützfußes und somit der Fußplatte in unbelastetem Zustand der Stützwinde verstanden.

Ebenso liegt bei einem maximal ausgelenkten Radsegment die jeweilige Endanschlagsfläche der Traverse flächig an dem unteren Rohrabschnitt der Stützwinde an, wodurch die auf die Bauteile wirkende Flächenpressung erheblich verringert wird.

Vorteilhafterweise ist zwischen der Traverse und dem Stützfuß jeweils ein Federelement angeordnet. Das Federelement ist vorzugsweise mit seinem ersten Ende an der Traverse und dem gegenüberliegenden zweiten Ende an der Fußplatte eingehängt. Dieser untere Anschlagpunkt der Federelemente an der Fußplatte sollte beidseitig des Scheitelpunktes des Radsegmentes vorgesehen sein. Sofern die Traversen gegenüber den unteren Anschlagpunkten nach außen versetzt sind, nehmen die Federelemente zueinander eine V-förmige Ausrichtung ein.

Zum besseren Verständnis wird die Erfindung nachfolgend anhand von insgesamt neun Figuren näher erläutert. Es zeigen die:
- **Fig. 1:**: eine perspektivische Ansicht auf ein erfindungsgemäßes Radsegment;
- **Fig. 2:**: eine Draufsicht auf das Radsegment gemäß Fig. 1;
- **Fig. 3:**: einen Schnitt durch das Radsegment längs der Schnittebene A-A in Fig. 2;
- **Fig. 4:**: einen Schnitt durch auf das Radsegment längs der Schnittebene B-B in Fig. 2;
- **Fig. 5:**: einen Schnitt durch das Radsegment längs der Schnittebene C-C in Fig. 4;
- **Fig. 6:**: einen Schnitt durch das Radsegment gemäß der Schnittebene D-D in Fig. 2;
- **Fig. 7:**: eine Vor-Kopf-Ansicht auf einen an einem unteren Rohrabschnitt montierten Stützfuß mit Radsegment und Fußplatte;
- **Fig. 8:**: einen Querschnitt durch einen Stützfuß mit Radsegment und Fußplatte in einer Ausgangsstellung und
- **Fig. 9:**: einen Querschnitt durch den Stützfuß gemäß Fig. 8 in einer maximal ausgelenkten Stellung.

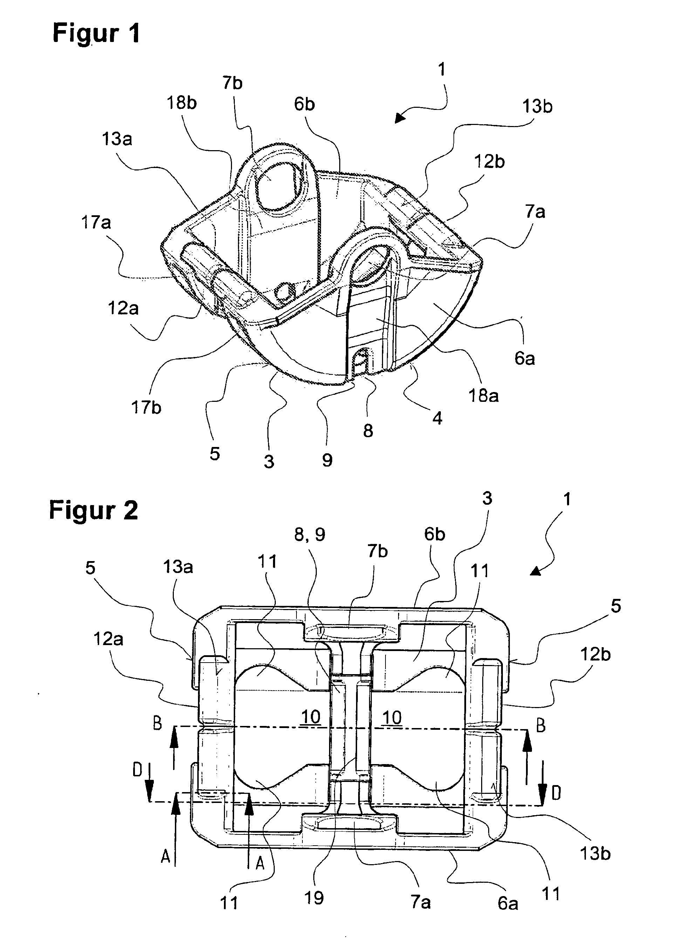

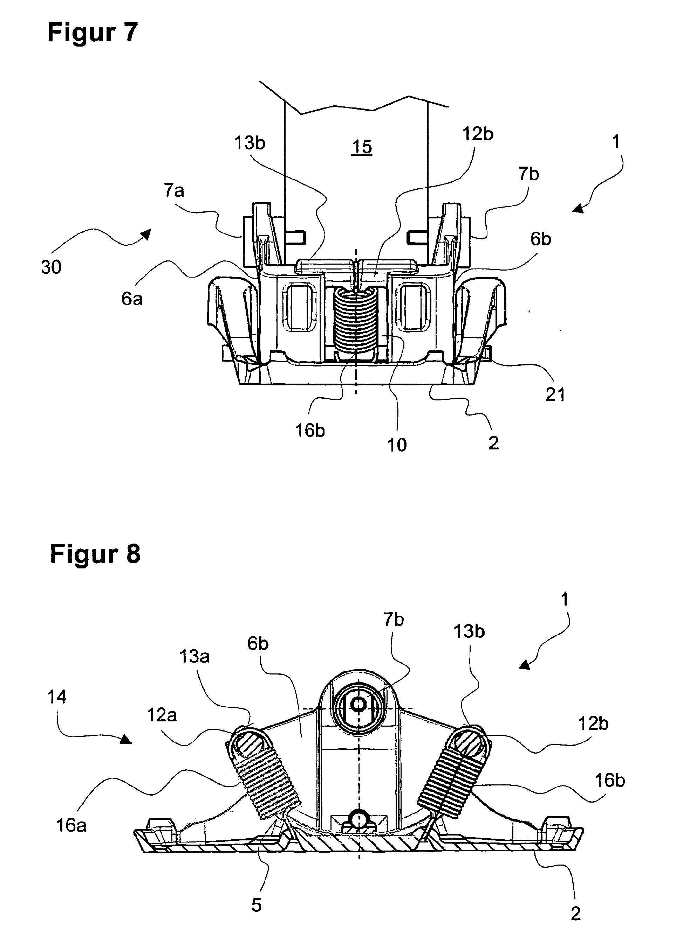

Die Figur 1 zeigt eine perspektivische Ansicht auf ein Radsegment 1, welches an einem unteren Rohrabschnitt 15 einer Stützwinde 30 (siehe Figur 7) angebracht ist.

Das Radsegment 1 weist zwei parallele Seitenwände 6a, 6b auf, die auf ihrer Unterseite 4 über ein teilzylindrisches Mantelelement 3, welches zwei konvex gewölbte Abrollflächen 5 aufweist, und über Traversen 12a, 12b sowie einen Mittelsteg 19 (siehe Figur 2) miteinander verbunden sind. Auf der Oberseite sind die Seitenwände 6a, 6b jeweils mit einem Anschlagpunkt 7a, 7b versehen, wobei beide Anschlagpunkte 7a, 7b in einer Schwenkachse fluchten. Die schwenkbare Anbringung des Radsegmentes 1 an dem unteren Rohrabschnitt 15 (siehe Figur 7) kann beispielsweise mittels eines durchgehenden Bolzens oder zweier einzelner, nicht weiter gezeigter Bolzen vorgenommen sein, wobei diese(r) gegenüber dem Rohrabschnitt 15 beziehungsweise einem darin einsetzbaren Lagerelement seitlich überstehen und in Wirkeingriff mit den Anschlagpunkten 7a, 7b gebracht sind.

Das Mantelelement 3 erstreckt sich in Umfangsrichtung in annähernd halbrunder Form bis zu einer horizontalen Ebene unterhalb der Anschlagpunkte 7a, 7b. Endseitig des Mantelelementes 3 befinden sich auf beiden Seiten die über die gesamte Breite verlaufenden Traversen 12a, 12b. Auf jeder Traverse 12a, 12b ist eine Materialverdickung mit einer ebenen Endanschlagsfläche 13a, 13b aufgebracht. Die Endanschlagsfläche 13a, 13b stößt bei einer Kontaktierung mit dem unteren Rohrabschnitt 15 (siehe Figur 7) flächig gegen diesen und mindert dadurch das Risiko einer Beschädigung sowohl seitens des Radsegmentes 1 als auch seitens des unteren Rohrabschnitts 15. Bei einem exakt aufrecht stehenden Radsegment 1 sind die Endanschlagsflächen 13a, 13b unter einem Winkel von ca. 45° nach innen geneigt. Exakt unterhalb der Anschlagpunkte 7a, 7b, in Umfangsrichtung mittig zwischen den Traversen 12a, 12b befindet sich der Scheitelpunkt 8 des Mantelelementes 3.

Die Seitenwände 6a, 6b weisen unterhalb der Anschlagpunkte 7a, 7b einen zurückversetzten Wandabschnitt 18a, 18b auf, der im Bereich der Unterseite 4 unmittelbar in das Mantelelement 3 mündet. Der zurückversetzte Wandabschnitt 18a, 18b dient zunächst der kernlosen Herstellung. Darüber hinaus wird die Stabilität aufgrund der Querschnittszunahme der Wandabschnitte 18a, 18b in Richtung der Anschlagpunkte 7a, 7b erhöht.

Die Figur 2 stellt das Radsegment 1 in einer Draufsicht dar, in der die rechteckige Grundform im Bereich der äquidistanten Seitenwände 6a, 6b und der beiden Traversen 12a, 12b erkennbar ist.

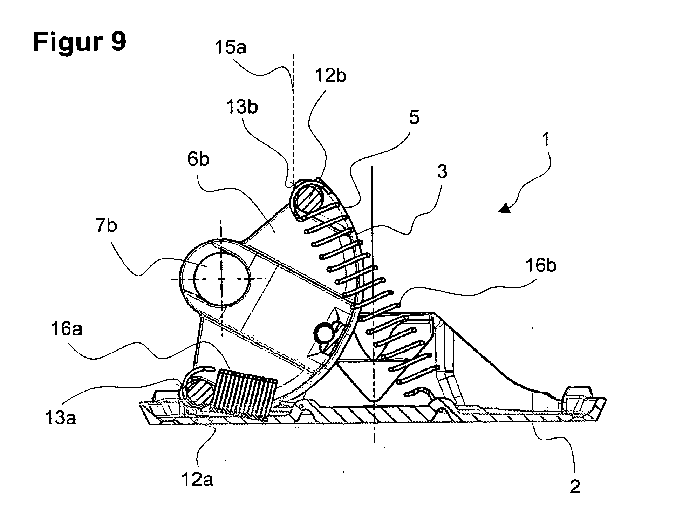

Zwischen den beiden Seitenwänden 6a, 6b sind in dem Mantelelement 3 beidseitig der Schnittlinie B-B ausgeformte Durchbrüche 10 zu erkennen. Die Durchbrüche 10 ermöglichen zunächst einen sehnenartigen Durchtritt eines Federelementes 16a, 16b entsprechend der Figuren 8 und 9 durch das Mantelelement 3. Insbesondere bei einem geneigten Radsegment 1 verläuft eines der Federelemente 16b zu einem erheblichen Teil innerhalb des Mantelelementes 3. Jeder Durchbruch 10 ist in Umfangsrichtung durch einen im Bereich des Scheitelpunktes 8, unterhalb der Anschlagpunkte 7a, 7b, in axialer Richtung die Seitenwände 6a, 6b verbindenden Mittelsteg 19 sowie die Traversen 12a, 12b begrenzt. Die Durchbrüche 10 weisen dabei eine im Wesentlichen rechteckige Kontur auf, dessen Breite mindestens dem Durchmesser der Federelemente 16a, 16b entspricht (siehe Figuren 8, 9).

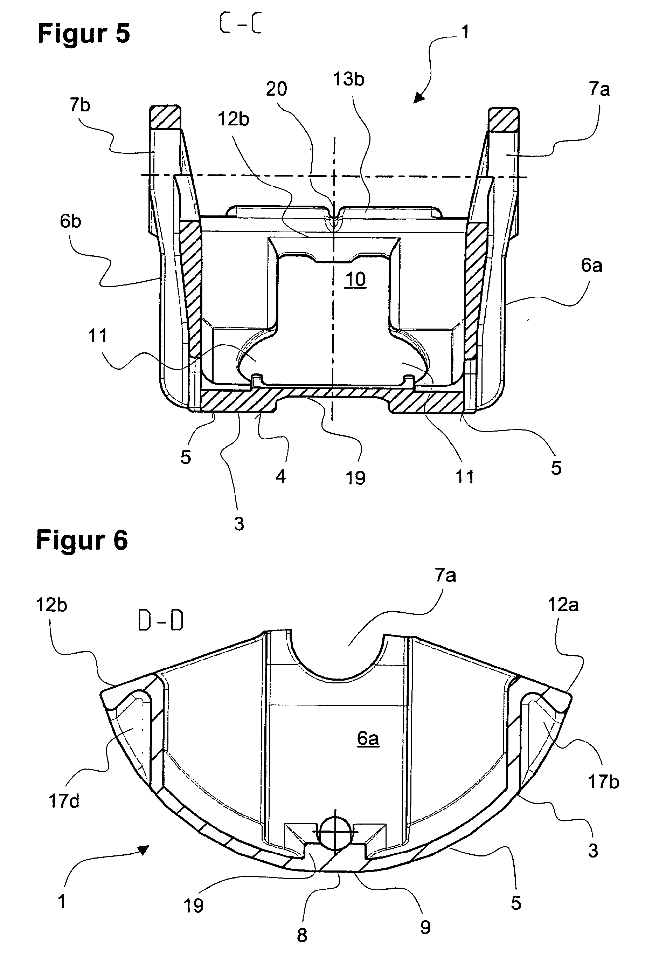

In Umfangsrichtung mittig zwischen dem Mittelsteg 19 und der jeweiligen Traverse 12a, 12b ist der Durchbruch 10 auf gegenüberliegenden Seiten jeweils mit einer halbkreisförmigen Aufweitung 11 ausgebildet. Die Darstellung der Figur 2 lässt in der Draufsicht die in Umfangsrichtung außerhalb der Aufweitung 11 liegenden Abschnitte des Durchbruchs 10 nicht erkennen; diese sind jedoch dem Schnitt in Figur 5 zu entnehmen. Die Aufweitungen 11 liegen in weniger belasteten Bereichen der Abrollfläche 5 und dienen der Gewichtsreduzierung der ansonsten gegenüber geschweißten Radsegmenten 1 schwereren Gussausführung.

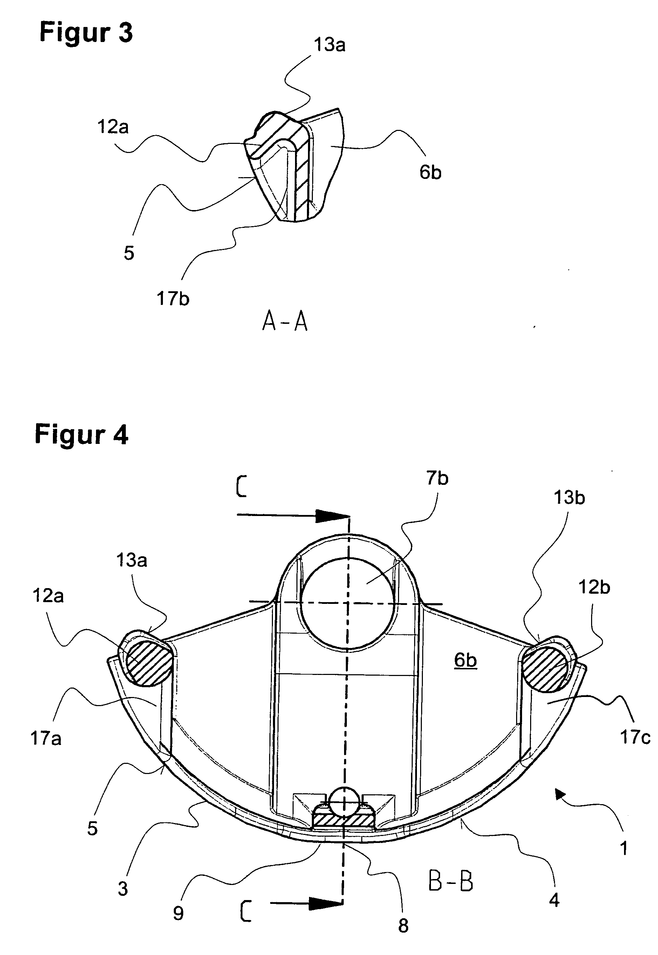

Die Figur 3 zeigt einen vergrößerten Ausschnitt des im Bereich der Traverse 12a geschnittenen Radsegmentes 1. Die Endanschlagsfläche 13a tritt aufgrund der gegossenen Bauweise als Materialverdickung aus der Traverse 12a nach oben hervor. Unterhalb der Traverse 12a befindet sich zwischen der Seitenwand 6a und dem Durchbruch 10 in der Abrollfläche 5 eine Tasche 17b und dahinter liegend eine weitere Tasche 17a, welche dazu beitragen sollen, eine Materialanhäufung mit der Gefahr einer Lunkernbildung zu vermeiden. Des Weiteren soll die Masse des Radsegmentes 1 durch die Taschen 17a-d verringert werden.

In der Figur 4 ist ein Längsschnitt durch das Rädsegment 1 entsprechend der Schnittlinie B-B in Figur 2 dargestellt. Im Bereich des Scheitelpunktes 8 weist die Abrollfläche 5 eine Abplattung 9 auf. Dieser Bereich steht bei einem Aufsetzen der Stützwinde 30 auf dem Boden in Kontakt mit dem darunter angeordneten Stützfuß 14 (siehe Figur 8) und nimmt in der Regel die größten zu erwartenden Kräfte auf. Aus diesem Grund steht durch die Ausbildung der Abplattung 9 auch eine entsprechend große Fläche zum Abführen der Kräfte in das Radsegment 1 zur Verfügung. Die Abplattung 9 weist mindestens die Erstreckung des Mittelstegs 19 auf. Aufgrund der Herstellung des Radsegments 1 als Gussteil, lässt sich die Abplattung besonders einfach herstellen.

Die Figur 5 zeigt besonders gut erkennbar den Verlauf des Durchbruchs 10 innerhalb der Abrollfläche 5, die von dem Mittelsteg 19 bis zu der Traverse 12b verläuft. Oberhalb der Aufweitungen 11 setzt sich der Durchbruch 10 in gleichmäßiger Breite, entsprechend seinem Verlauf unterhalb der Aufweitungen 11, fort. Hierdurch wird der Verlust an Aufstandsfläche durch die Taschen 17a-d kompensiert.

Die Traverse 12b, wie auch die identisch ausgeformte Traverse 12a, weisen innerhalb der Längsachse im Bereich der Endanschlagsfläche 13a, 13b jeweils eine Kerbe 20 auf. Die Kerbe 20 vereinfacht das Einhängen eines Federelementes 16a, 16b unmittelbar an der Traverse 12a, 12b des Radsegmentes 1 (siehe Figuren 8, 9).

Die Figur 6 zeigt einen Schnitt längs der Schnittlinie D-D in Figur 2. Die Traversen 12a, 12b weisen in diesem seitlichen Bereich keine Endanschlagsflächen 13a, 13b auf, da sie außerhalb des Einwirkungsbereiches des unteren Rohrabschnittes 15 liegen. Unterhalb der Traversen 12a, 12b sind die Taschen 17b, 17d zu erkennen. Die Taschen 17a, 17b, 17c, 17d sind durch einen partiellen, vertikalen Wandverlauf der Abrollfläche 5 gebildet, der an seinem oberen Abschnitt in die jeweilige Traverse 12a, 12b übergeht.

Der Mittelsteg 19 ragt als Verdickung des Gussmaterials auf der Oberseite der Abrollfläche 5 empor und erhöht dadurch die Festigkeit des Radsegments 1 im Bereich der Abplattung 9.

Die Figur 7 stellt in einer Vor-Kopf-Ansicht das untere Ende einer ansonsten nicht weiter gezeigten Stützwinde 30, beziehungsweise deren unteren Rohrabschnitt 15 mit einem daran angebrachten Stützfuß 14 dar. Der Stützfuß 14 umfasst das Radsegment 1 und die daran angreifende Fußplatte 2. Das Radsegment 1 ist in bekannter Weise mit seinen Anschlagpunkten 7a, 7b schwenkbar an dem unteren Rohrabschnitt 15 befestigt. Die Fußplatte 2 ist wiederum lösbar oder unlösbar mittels des Stabs 21 an dem Radsegment 1 angebracht, wobei der Stab 21 das Radsegment 1 oberhalb des Mittelstegs 19 (siehe Figur 6) durchläuft. Innerhalb des Durchbruchs 10 befindet sich das Federelement 16b, welches an seinem oberen Ende an der Traverse 12b und an seinem gegenüberliegenden unteren Ende an der Fußplatte 2 eingehakt ist. Ein zweites Federelement 16a ist auf der in der gezeigten Ansicht nicht sichtbaren Rückseite in gleicher Weise angeordnet.

Beide Federelemente 16a, 16b halten den unbelasteten Stützfuß 14 entsprechend der Figur 8 in einer neutralen Position, in welcher das Radsegment 1 mittig über der Fußplatte 2 ausgerichtet ist. Beide Federelemente 16a, 16b stehen in dieser Position unter einer geringen Vorspannung.

Die Figur 9 zeigt den Stützfuß 14 nach einer lateralen Verschiebung, wobei das Radsegment 1 mit seinen Abrollflächen 5 einseitig auf der Fußplatte 2 abgerollt ist. Der Abrollvorgang ist durch das Anliegen der Endanschlagsfläche 13b der Traverse 12b an der schematisch eingezeichneten Wandung 15a des unteren Rohrabschnitts 15 begrenzt. Das Federelement 16a befindet sich in einer zusammengezogenen und das Federelement 16b in einer maximal gedehnten Stellung.

### Bezugszeichenliste

- 1: Radsegment
- 2: Fußplatte
- 3: teilzylindrisches Mantelelement
- 4: Unterseite
- 5: Abrollfläche
- 6 a,b: Seitenwand
- 7 a,b: Anschlagpunkt
- 8: Scheitelpunkt Abrollfläche
- 9: Abplattung
- 10: Durchbruch
- 11: Aufweitung
- 12 a,b: Traverse
- 13 a,b: Endanschlagfläche
- 14: Stützfuß
- 15: unterer Rohrabschnitt Stützwinde
- 15a: Wandung unterer Rohrabschnitt
- 16 a,b: Federelement
- 17a-d: Taschen
- 18: a, b zurückversetzter Wandabschnitt
- 19: Mittelsteg
- 20: Kerbe
- 21: Stab
- 30: Stützwinde

## Patentansprüche

1. Radsegment (1) zur schwenkbaren Anbringung einer Fußplatte (2) an eine Stützwinde (30), wobei das Radsegment (1) ein teilzylindrisches Mantelelement (3) mit einer auf seiner Unterseite (4) gewölbten Abrollfläche (5) und zwei radial auf dem Mantelelement (3) stehenden Seitenwände (6a, 6b) aufweist, in deren oberen Abschnitt jeweils ein Anschlagpunkt (7a, 7b) ausgebildet ist,
**dadurch gekennzeichnet,**
**dass** das Radsegment (1) als einstückiges Gussteil gefertigt ist und das Mantelelement (3) in der Abrollfläche (5) an seinen unteren Scheitelpunkt (8) eine Abplattung (9) aufweist.

2. Radsegment (1) nach Anspruch 1, **dadurch gekennzeichnet, dass** im Mantelelement (3) beidseitig des unteren Scheitelpunktes (8) jeweils ein Durchbruch (10) ausgebildet ist.

3. Radsegment (1) nach Anspruch 1 oder 2, **dadurch gekennzeichnet, dass** die Seitenwände (6a, 6b) in Umfangsrichtung endseitig mittels Traversen (12a, 12b) miteinander verbunden sind.

4. Radsegment (1) nach Anspruch 2 oder 3, **dadurch gekennzeichnet, dass** der Durchbruch (10) in Umfangsrichtung des Mantelelementes (3) nach außen beabstandet zu dem Scheitelpunkt (8) mindestens eine Aufweitung (11) aufweist.

5. Radsegment (1) nach Anspruch 1, **dadurch gekennzeichnet, dass** jede Traverse (12a, 12b) eine nach innen geneigte Endanschlagsfläche (13a, 13b) aufweist.

6. Radsegment (1) nach einem der Ansprüche 1 bis 5, **dadurch gekennzeichnet, dass** dieses ohne Kern gegossen ist.

7. Anordnung eines Stützfußes (14), umfassend ein Radsegment (1) nach einem der Ansprüche 1 bis 6 und eine daran befestigte Fußplatte (2), an einer Stützwinde (30), wobei die Stützwinde (30) einen unteren Rohrabschnitt (15) aufweist, an welchem das Radsegment (1) schwenkbar gelagert ist, und das Radsegment (1) abrollbar auf der Fußplatte (2) aufsteht.

8. Anordnung nach Anspruch 7, **dadurch gekennzeichnet, dass** in einer Ausgangsstellung die Abplattung (9) in flächenartigem Wirkkontakt mit der Fußplatte (2) steht.

9. Anordnung nach Anspruch 7 oder 8, **dadurch gekennzeichnet, dass** bei einem maximal ausgelenkten Radsegment (1) die jeweilige Endanschlagsfläche (13a, 13b) flächig an dem unteren Rohrabschnitt (15) anliegt.

10. Anordnung nach einem der Ansprüche 7 bis 9, **dadurch gekennzeichnet, dass** zwischen der Traverse (12a, 12b) und der Fußplatte (2) jeweils ein Federelement (16a, 16b) angeordnet ist.

## Claims

1. Wheel segment (1) for pivotably fitting a base plate (2) to a support winch (30), the wheel segment (1) having a partially cylindrical covering element (3) having a rolling face (5) which is curved at the lower side (4) thereof and two lateral walls (6a, 6b) which extend radially on the covering element (3) and in the upper portion of which a stop point (7a, 7b) is formed respectively,
**characterised in that**
the wheel segment (1) is produced as an integral cast component and the covering element (3) has a flattened portion (9) in the rolling face (5) at the lower apex (8) thereof.

2. Wheel segment (1) according to claim 1, **characterised in that** an aperture (10) is formed in each case in the covering element (3) at both sides of the lower apex (8).

3. Wheel segment (1) according to claim 1 or claim 2, **characterised in that** the lateral walls (6a, 6b) are connected to each other in a peripheral direction at the end side by means of cross-members (12a, 12b).

4. Wheel segment (1) according to claim 2 or claim 3, **characterised in that** the aperture (10) in the peripheral direction of the covering element (3) has at least one widened portion (11) spaced outwards with respect to the apex (8).

5. Wheel segment (1) according to claim 1, **characterised in that** each cross-member (12a, 12b) has an end stop face (13a, 13b) which is inclined in an inward direction.

6. Wheel segment (1) according to any one of claims 1 to 5, **characterised in that** it is cast without a core.

7. Arrangement of a support base (14), comprising a wheel segment (1) according to any one of claims 1 to 6 and a base plate (2) which is fixed thereto, on a support winch (30), the support winch (30) having a lower tubular portion (15) on which the wheel segment (1) is pivotably supported and the wheel segment (1) extending so as to be able to be rolled on the base plate (2).

8. Arrangement according to claim 7, **characterised in that** in an initial position the flattened portion (9) is in surface operational contact with the base plate (2).

9. Arrangement according to claim 7 or claim 8, **characterised in that**, with a wheel segment (1) which is deflected to the maximum extent, the respective end stop face (13a, 13b) is in planar abutment on the lower tubular portion (15).

10. Arrangement according to any one of claims 7 to 9, **characterised in that** a resilient element (16a, 16b) is arranged in each case between the cross-member (12a, 12b) and the base plate (2).

## Revendications

1. Segment de roue (1) pour le montage pivotant d'une plaque d'appui (2) sur une béquille (30), sachant que le segment de roue (1) présente un élément d'enveloppe partiellement cylindrique (3) doté d'une surface de roulement bombée (5) sur sa face inférieure (4) et de deux parois latérales (6a, 6b) se dressant radialement sur l'élément d'enveloppe (3), un point d'accrochage respectif (7a, 7b) étant formé dans la partie
supérieure desdites parois,
**caractérisé en ce que** le segment de roue (1) est fabriqué sous la forme d'une pièce moulée en fonte d'un seul tenant, et l'élément d'enveloppe (3) présente dans la surface de roulement (5) un méplat (9) à son sommet inférieur (8).

2. Segment de roue (1) selon la revendication 1, **caractérisé en ce qu'**un percement respectif (10) est ménagé de part et d'autre du sommet inférieur (8) dans l'élément d'enveloppe (3).

3. Segment de roue (1) selon la revendication 1 ou 2, **caractérisé en ce que** les parois latérales (6a, 6b) sont reliées entre elles à leurs extrémités en direction périphérique au moyen de traverses (12a, 12b).

4. Segment de roue (1) selon la revendication 2 ou 3, **caractérisé en ce que** le percement (10) présente, à distance du sommet (8) vers l'extérieur dans la direction périphérique de l'élément d'enveloppe (3), au moins un élargissement (11).

5. Segment de roue (1) selon la revendication 1, **caractérisé en ce que** chaque traverse (12a, 12b) présente une face de butée terminale (13a, 13b) inclinée vers l'intérieur.

6. Segment de roue (1) selon l'une des revendications 1 à 5, **caractérisé en ce que** ledit segment de roue est moulé sans noyau.

7. Agencement d'un pied d'appui (14), comprenant un segment de roue (1) selon l'une des revendications 1 à 6 et une plaque d'appui (2) fixée sur ledit segment, sur une béquille (30), sachant que la béquille (30) présente une partie tubulaire inférieure (15) sur laquelle le segment de roue (1) est monté pivotant, et que le segment de roue (1) se dresse avec possibilité de roulement sur la plaque d'appui (2).

8. Agencement selon la revendication 7, **caractérisé en ce que**, dans une position initiale, le méplat (9) est en contact opérationnel surfacique avec la plaque d'appui (2).

9. Agencement selon la revendication 7 ou 8, **caractérisé en ce que**, avec un segment de roue (1) en position déviée maximale, la face de butée terminale respective (13a, 13b) s'applique surfaciquement contre la partie tubulaire inférieure (15).

10. Agencement selon l'une des revendications 7 à 9, **caractérisé en ce qu'**un élément de ressort respectif (16a, 16b) est disposé entre la traverse (12a, 12b) et la plaque d'appui (2).
